# EUROPEAN PATENT APPLICATION

(11) **EP 3 305 879 A1**
(43) Date of publication of application: **11.04.2018**
(21) Application number: 16799991.1
(22) Date of filing: 23.05.2016
(51) Int. Cl.: C10M 107/24, C09K 5/04, F25B 1/00, C10N 20/02, C10N 20/04, C10N 30/00, C10N 40/30

(54) **REFRIGERATION OIL, REFRIGERATOR COMPOSITION, AND REFRIGERATOR**

(30) Priority: 26.05.2015 JP 2015106651
(71) Applicant: Idemitsu Kosan Co., Ltd, Tokyo 100-8321 (JP)
(72) Inventor: KISEN, Tadashi, Sodegaura-shi Chiba 299-0293 (JP); TERADA, Izumi, Sodegaura-shi Chiba 299-0293 (JP); SHIBATA, Mitsuru, Sodegaura-shi Chiba 299-0293 (JP); MATSUMOTO, Tomoya, Ichihara-shi Chiba 299-0107 (JP); NAKAJIMA, So, Ichihara-shi Chiba 299-0107 (JP)
(74) Representative: Hoffmann Eitle
(86) International application number: PCT/JP2016/065227
(87) International publication number: WO 2016/190286

(57) **Abstract**

The refrigerator oil of the present invention is a refrigerator oil for a refrigerant including difluoromethane (R32), which contains a polyvinyl ether-based compound (A) including a constitutional unit (a1) having a methoxyethyl group in a side chain thereof.

## Description

### Technical Field

The present invention relates to a refrigerator oil, a composition for refrigerator containing a refrigerant and the refrigerator oil, and a refrigerator in which the refrigerator oil or the composition for refrigerator is used.

### Background Art

In general, a compression type refrigerator is configured of at least a compressor, a condenser, an expansion mechanism (such as an expansion valve, etc.), an evaporator, and so on and has a structure in which a mixture of a refrigerant and a refrigerator oil (hereinafter also referred to as "composition for refrigerator") is circulated in the closed system.

As the refrigerant that is used for the compression type refrigerator, various CFC substitutes which are less concern of destruction of the ozone layer inclusive of HFCs (hydrofluorocarbons), for example, 1,1,1,2-tetrafluoroethane (R-134a), etc., are used.

However, even HFCs involve such a problem that the global warming capacity is high. Thus, a refrigerant that is low in global warming potential and less in influences against the global warming has been recently required. As such a refrigerant, in addition to carbonic acid gas (carbon dioxide), ammonia, a hydrocarbon gas, and so on, a difluoromethane (R32) refrigerant is also investigated.

Now, in the compression type refrigerator, in general, the inside of the compressor becomes high in temperature, whereas the inside of the condenser becomes low in temperature, and hence, the composition for refrigerator is required to circulate within this system in the wide temperature range of from low temperatures to high temperatures without causing phase separation between the refrigerant and the refrigerator oil.

Supposing that the phase separation of the composition for refrigerator is generated during operation of the refrigerator, the life and efficiency of the refrigerator are remarkably adversely affected. For example, in the compressor, when the phase separation of the composition for refrigerator is generated, a movable part fails in lubrication to cause seize, etc., resulting in a remarkable lowering of the life of the refrigerator. In addition, in the evaporator, when the phase separation of the composition for refrigerator is generated, a remarkable lowering of the heat exchange efficiency is brought due to the presence of the separated high-viscosity refrigerator oil.

Namely, the refrigerator oil that is used for the refrigerator is particularly required to have compatibility with the refrigerant to be used along with stability and lubricating performance. Accordingly, the development of a refrigerator oil with excellent compatibility with the aforementioned R32 refrigerant having a low global warming potential is desired. As the refrigerator oil suited for use together with the R32 refrigerant, a polyvinyl ether-based compound is also investigated as one candidate.

For example, PTL 1 discloses a lubricating oil for refrigerator (refrigerator oil) composed mainly of a polyvinyl ether-based compound having an oxyalkylene chain in a side chain thereof.

In addition, PTL 2 discloses a lubricating oil for refrigerator (refrigerator oil) composed mainly of a polyvinyl ether-based compound having an oxyalkylene chain in a side chain thereof and also having a carbon/oxygen molar ratio of 4.2 to 7.0.

In PTLs 1 and 2, the compatibility of the refrigerator oil including the aforementioned polyvinyl ether-based compound with the R32 refrigerant is investigated.

### Citation List

### Patent Document

PTL 1: JP 6-128578 A
PTL 2: JP 8-193196 A

### Summary of Invention

### Technical Problem

Now, there would be a case where the compression type refrigerator is used for a heat pump application in a cold district or an air conditioning application in a low-temperature warehouse.

In the refrigerator that is used in a general environment, it is considered that a temperature region in which the refrigerant and the refrigerator oil are compatible with each other without causing phase separation is preferably about -20 to 0°C.

However, in the refrigerator that is used for a heat pump application in a cold district or an air conditioning application in a low-temperature warehouse, it is required that the refrigerant and the refrigerator oil are compatible with each other even at -30°C or lower without causing phase separation.

In the refrigerator oils including a polyvinyl ether-based compound as disclosed in PTLs 1 and 2, the two-layer separation temperature on the low-temperature side of the refrigerator oils and the R32 refrigerant is -20°C or higher, and in order that such a refrigerator oil may be used for a refrigerator to be used for the aforementioned application, a more improvement is required.

In view of the aforementioned problems, the present invention has been made, and an object thereof is to provide a refrigerator oil that is excellent in compatibility with a difluoromethane (R32) refrigerant even in a low-temperature environment of -30°C or lower, a composition for refrigerator containing a refrigerant and the refrigerator oil, and a refrigerator in which the refrigerator oil or the composition for refrigerator is used.

### Solution to Problem

As a result of extensive and intensive investigations made by the present inventors, it has been found that a refrigerator oil including a polyvinyl ether-based compound having a methoxyethyl group is able to solve the aforementioned problem, thereby leading to accomplishment of the present invention.

Specifically, the present invention provides the following [1] to [3].
[1] A refrigerator oil for a refrigerant including difluoromethane (R32), including a polyvinyl ether-based compound (A) including a constitutional unit (a1) having a methoxyethyl group in a side chain thereof.
[2] A composition for refrigerator, containing a refrigerant including difluoromethane (R32) and the refrigerator oil as set forth in the above [1].
[3] A refrigerator in which the refrigerator oil as set forth in the above [1], or the composition for refrigerator as set forth in the above [2] is used.

### Advantageous Effects of Invention

The refrigerator oil of the present invention is excellent in compatibility with a difluoromethane (R32) refrigerant even in a low-temperature environment of -30°C or lower. The temperature in the foregoing low-temperature environment is preferably -35°C or lower, more preferably -40°C or lower, and still more preferably -50°C or lower.

### Description of Embodiments

### [Refrigerator Oil]

The refrigerator oil of the present invention is a refrigerator oil for a refrigerant including difluoromethane (R32) (hereinafter also referred to as "R32 refrigerant"), which includes a polyvinyl ether-based compound (A) including a constitutional unit (a1) having a methoxyethyl group in a side chain thereof.

In the refrigerator oil of an embodiment of the present invention, the polyvinyl ether-based compound (A) may be contained alone, or a combination of two or more thereof may be contained.

The refrigerator oil of an embodiment of the present invention may contain a base oil other than the polyvinyl ether-based compound (A) within a range where the advantageous effects of the present invention are not impaired, and in addition, it may also contain an additive for refrigerator oil to be blended in a refrigerator oil.

In the present specification, the "refrigerator oil" refers to one including a base oil including the polyvinyl ether-based compound (A) and the additive for refrigerator oil, and the "composition for refrigerator" refers to a mixture of the foregoing refrigerator oil with a refrigerant.

In the refrigerator oil of an embodiment of the present invention, from the viewpoint of providing a refrigerator oil that is excellent in compatibility with the R32 refrigerant, the content of the polyvinyl ether-based compound (A) is preferably 70 to 100% by mass, more preferably 75 to 100% by mass, still more preferably 80 to 100% by mass, yet still more preferably 85 to 100% by mass, and especially preferably 100% by mass based on the total amount (100% by mass) of the refrigerator oil.

### [Polyvinyl Ether-based Compound (A)]

The polyvinyl ether-based compound (A) that is included in the refrigerator oil of the present invention is a compound having a polyvinyl ether structure and includes a constitutional unit (a1) having a methoxyethyl group in a side chain thereof.

The present inventors have found that the polyvinyl ether-based compound (A) having the constitutional unit (a1) having a methoxyethyl group in a side chain thereof is excellent in compatibility with the R32 refrigerant even in a low-temperature environment of -30°C or lower and may suppress the phase separation, thereby leading to accomplishment of the present invention.

From the viewpoint of making a lubricating performance of the refrigerator oil favorable, a number average molecular weight (Mn) of the polyvinyl ether-based compound (A) is preferably 300 to 3,000, more preferably 350 to 2,500, still more preferably 400 to 2,000, and yet still more preferably 500 to 1,500.

In the present specification, the number average molecular weight is a value as expressed in terms of standard polystyrene as measured by means of gel permeation chromatography (GPC), and specifically, it means a value as measured by the method described in the Examples.

A kinematic viscosity at 40°C of the polyvinyl ether-based compound (A) is preferably 5 to 1,000 mm²/s, more preferably 7 to 300 mm²/s, still more preferably 10 to 150 mm²/s, and yet still more preferably 20 to 110 mm²/s.

In the present specification, the kinematic viscosity at 40°C means a value as measured in conformity with JIS K2283:1983.

### <Constitutional Unit (a1)>

Preferably, the constitutional unit (a1) which the polyvinyl ether-based compound (A) has is one represented by the following general formula (1).

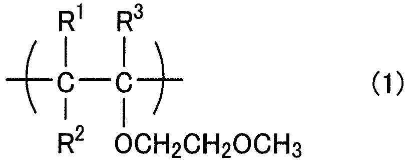

In the general formula (1), R¹ to R³ each independently represent a hydrogen atom or a hydrocarbon group having a carbon number of 1 to 8 (preferably 1 to 6, more preferably 1 to 4, and still more preferably 1 to 2).

Examples of the aforementioned hydrocarbon group which may be selected as R¹ to R³ include alkyl groups, such as a methyl group, an ethyl group, a n-propyl group, an isopropyl group, a n-butyl group, an isobutyl group, a sec-butyl group, a tert-butyl group, various pentyl groups, various hexyl groups, various heptyl groups, various octyl groups, etc.; cycloalkyl groups, such as a cyclopentyl group, a cyclohexyl group, various methylcyclohexyl groups, various ethylcyclohexyl groups, various dimethylcyclohexyl groups, etc.; aryl groups, such as a phenyl group, various methylphenyl groups, various ethylphenyl groups, various dimethylphenyl groups, etc.; arylalkyl groups, such as a benzyl group, various phenylethyl groups, various methylbenzyl groups, etc.; and the like.

Among those, all of R¹ to R³ are preferably a hydrogen atom or an alkyl group, and all of them are more preferably a hydrogen atom.

In an embodiment of the present invention, R¹ to R³ in the foregoing general formula (1) may be the same as or different from each other for every constitutional unit. That is, in an embodiment of the present invention, the polyvinyl ether-based compound (A) may include a copolymer in which any one or all of R¹ to R³ are different for every constitutional unit.

In an embodiment of the present invention, the polyvinyl ether-based compound (A) may have, together with the constitutional unit (a1), other constitutional unit that is different from the constitutional unit (a1).

From the viewpoint of providing a refrigerator oil that is excellent in compatibility with the R32 solvent, the content of the constitutional unit (a1) is preferably 1 mol% or more, more preferably 10 mol% or more, still more preferably 20 mol% or more, and yet still more preferably 30 mol% or more, and preferably 100 mol% or less, more preferably 80 mol% or less, and still more preferably 60 mol% or less, based on the total constitutional units (100 mol%) of the polyvinyl ether-based compound (A).

### <Constitutional Unit (a2)>

In an embodiment of the present invention, it is preferred that the polyvinyl ether-based compound (A) includes, together with the constitutional unit (a1), a constitutional unit (a2) represented by the following general formula (2) that is different from the constitutional unit (a1).

When the polyvinyl ether-based compound (A) including the constitutional units (a1) and (a2) is used, a refrigerator oil having a high volume resistivity may be provided.

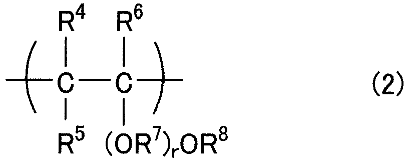

In the general formula (2), R⁴ to R⁶ each independently represent a hydrogen atom or a hydrocarbon group having a carbon number of 1 to 8 (preferably 1 to 6, more preferably 1 to 4, and still more preferably 1 to 2).

Examples of the hydrocarbon group which may be selected as R⁴ to R⁶ include the same hydrocarbon groups which may be selected as R¹ to R³ as described above.

Among those, all of R⁴ to R⁶ are preferably a hydrogen atom or an alkyl group, and all of them are more preferably a hydrogen atom.

R⁷ represents a divalent hydrocarbon group having a carbon number of 2 to 10 (preferably 2 to 6, and more preferably 2 to 4).

r represents a number of 0 to 10, preferably 0 to 3, more preferably 0 to 2, still more preferably 0 to 1, and yet still more preferably 0.

In the case where r is 2 or more, then plural R⁷s may be the same as or different from each other.

Examples of the divalent hydrocarbon group which may be selected as R⁷ include alkylene groups, such as an ethylene group, a phenylethylene group, a 1,2-propylene group, a 2-phenyl-1,2-propylene group, a 1,3-propylene group, various butylene groups, various pentylene groups, various hexylene groups, various heptylene groups, various octylene groups, various nonylene groups, various decylene groups, etc.; divalent alicyclic hydrocarbon groups, such as a cyclohexylene group, a methylcyclohexylene group, an ethylcyclohexylene group, a dimethylcyclohexylene group, a propylcyclohexylene group, etc.; divalent aromatic hydrocarbon groups, such as various phenylene groups, various methylphenylene groups, various ethylphenylene groups, various dimethylphenylene groups, various naphthylene groups, etc.; divalent alkyl aromatic hydrocarbon groups having a monovalent bonding site in each of an alkyl group moiety and an aromatic moiety of an alkyl aromatic hydrocarbon, such as toluene, ethylbenzene, etc.; divalent alkyl aromatic hydrocarbon groups having a bonding site in an alkyl group moiety of a polyalkyl aromatic hydrocarbon, such as xylene, diethylbenzene, etc.; and the like.

Among those, R⁷ is preferably an alkylene group, and more preferably an alkylene group having a carbon number of 2 to 4.

R⁸ represents a hydrocarbon group having a carbon number of 1 to 10 (preferably 1 to 8, more preferably 1 to 6, and still more preferably 1 to 4).

Examples of the hydrocarbon group which may be selected as R⁸ include, in addition to the groups exemplified as the hydrocarbon group having a carbon number of 1 to 8, which may be selected as R¹ to R³ as described above, alkyl groups, such as various nonyl groups, various decyl groups, etc.; cycloalkyl groups, such as various propylcyclohexyl groups, various trimethylcyclohexyl groups, etc.; aryl groups, such as various propylphenyl groups, various trimethylphenyl groups, various butylphenyl groups, various naphthyl groups, etc.; arylalkyl groups, such as various phenylpropyl groups, various phenylbutyl groups, etc.; and the like.

Among those, R⁸ is preferably an alkyl group, and more preferably an alkyl group having a carbon number of 1 to 4.

Since the constitutional unit (a2) is one having a structure different from the constitutional unit (a1), in the case where R⁷ in the foregoing general formula (2) is an ethylene group (-CH₂CH₂-), r is not 1 or R⁸ is not a methyl group.

In an embodiment of the present invention, the constitutional unit (a2) is more preferably a constitutional unit (a2-1) represented by the following general formula (2-1).

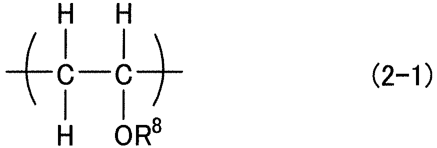

In the general formula (2-1), R⁸ is the same as prescribed in the foregoing general formula (2).

The content of the constitutional unit (a2-1) is preferably 70 to 100 mol%, more preferably 80 to 100 mol%, and still more preferably 90 to 100 mol% based on the total amount (100 mol%) of the constitutional unit (a2) included in the polyvinyl ether-based compound (A).

In an embodiment of the present invention, the content of the constitutional unit wherein R⁸ in the general formulae (2) and (2-1) is an ethyl group is preferably 50 to 100 mol%, more preferably 70 to 100 mol%, and still more preferably 80 to 100 mol% based on the total amount (100 mol%) of the constitutional unit (a2) included in the polyvinyl ether-based compound (A).

In an embodiment of the present invention, the content of the constitutional unit (a2) is preferably 0 to 99 mol%, more preferably 5 to 90 mol%, still more preferably 10 to 80 mol%, yet still more preferably 20 to 70 mol%, and especially preferably 40 to 60 mol% based on the total constitutional units (100 mol%) of the polyvinyl ether-based compound (A).

In an embodiment of the present invention, the polyvinyl ether-based compound (A) may also have other constitutional unit than the constitutional unit (a1) and the constitutional unit (a2).

However, the total content of the constitutional unit (a1) and the constitutional unit (a2) is preferably 70 to 100 mol%, more preferably 80 to 100 mol%, still more preferably 90 to 100 mol%, yet still more preferably 95 to 100 mol%, and especially preferably 100 mol% based on the total constitutional units (100 mol%) of the polyvinyl ether-based compound (A).

### <Terminal Moiety of Polyvinyl Ether-based Compound (A)>

Into the terminal moiety of the polyvinyl ether-based compound (A), a monovalent group derived from a saturated hydrocarbon, an ether, an alcohol, a ketone, an amide, a nitrile, or the like may be introduced.

In an embodiment of the present invention, at least one of the terminal moieties of the polyvinyl ether-based compound (A) is preferably a group represented by the following general formula (3-1).

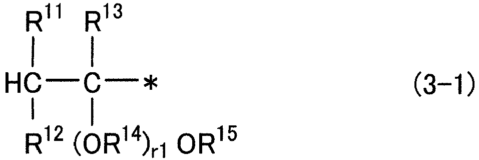

In the general formula (3-1), R¹¹ to R¹³ each independently represent a hydrogen atom or a hydrocarbon group having a carbon number of 1 to 8 (preferably 1 to 6, more preferably 1 to 4, and still more preferably 1 to 2).

R¹⁴ represents a divalent hydrocarbon group having a carbon number of 2 to 10 (preferably 2 to 6, and more preferably 2 to 4).

r1 represents a number of 0 to 10, preferably 0 to 3, more preferably 0 to 2, and still more preferably 0 to 1. In the case where r1 is 2 or more, then plural R¹⁴s may be the same as or different from each other.

R¹⁵ represents a hydrocarbon group having a carbon number of 1 to 10 (preferably 1 to 8, more preferably 1 to 6, and still more preferably 1 to 4). * represents a bonding portion.

Furthermore, in an embodiment of the present invention, it is preferred that one of the terminal moieties of the polyvinyl ether-based compound (A) is the group represented by the foregoing general formula (3-1), and the other is any one of groups represented by the following general formulae (3-1a), (3-1b), and (3-1c), or a group having an olefinic unsaturated bond.

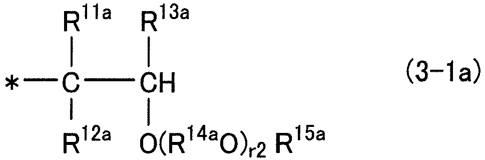

In the general formula (3-1a), R^{11a} to R^{13a} each independently represent a hydrogen atom or a hydrocarbon group having a carbon number of 1 to 8 (preferably 1 to 6, more preferably 1 to 4, and still more preferably 1 to 2).

R^{14a} represents a divalent hydrocarbon group having a carbon number of 2 to 10 (preferably 2 to 6, and more preferably 2 to 4).

r2 represents a number of 0 to 10, preferably 0 to 3, more preferably 0 to 2, and still more preferably 0 to 1. In the case where r2 is 2 or more, then plural R^{14a}s may be the same as or different from each other.

R^{15a} represents a hydrocarbon group having a carbon number of 1 to 10 (preferably 1 to 8, more preferably 1 to 6, and still more preferably 1 to 4). * represents a bonding portion.

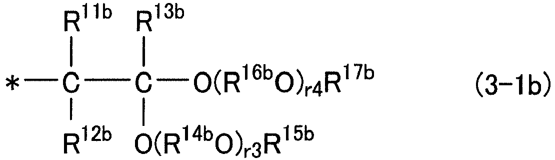

In the general formula (3-1b), R^{11b} to R^{13b} each independently represent a hydrogen atom or a hydrocarbon group having a carbon number of 1 to 8 (preferably 1 to 6, more preferably 1 to 4, and still more preferably 1 to 2).

R^{14b} and R^{16b} each independently represent a divalent hydrocarbon group having a carbon number of 2 to 10 (preferably 2 to 6, and more preferably 2 to 4).

r3 and r4 each independently represent a number of 0 to 10, preferably 0 to 3, more preferably 0 to 2, and still more preferably 0 to 1. In the case where r3 and r4 are each 2 or more, plural R^{14b}s and R^{16b}s may be each the same as or different from each other.

R^{15b} and R^{17b} each independently represent a hydrocarbon group having a carbon number of 1 to 10 (preferably 1 to 8, more preferably 1 to 6, and still more preferably 1 to 4). * represents a bonding portion.

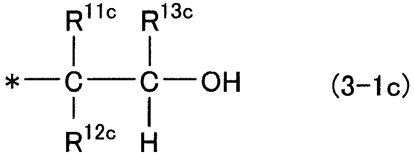

In the general formula (3-1c), R^{11c} to R^{13c} each independently represent a hydrogen atom or a hydrocarbon group having a carbon number of 1 to 8 (preferably 1 to 6, more preferably 1 to 4, and still more preferably 1 to 2).

In the foregoing general formulae (3-1), (3-1a), (3-1b), and (3-1c), examples of the hydrocarbon group having a carbon number of 1 to 8, which may be selected as R¹¹ to R¹³, R^{11a} to R^{13a}, R^{11b} to R^{13b}, and R^{11c} to R^{13c} include the same hydrocarbon groups having a carbon number of 1 to 8, which may be selected as R⁴ to R⁶ in the foregoing general formula (2), and suitable groups thereof are also the same.

Examples of the divalent hydrocarbon group having a carbon number of 2 to 10, which may be selected as R¹⁴, R^{14a}, R^{14b}, and R^{16b} include the same divalent hydrocarbon groups having a carbon number of 2 to 10, which may be selected as R⁷ in the foregoing general formula (2), and suitable groups thereof are also the same.

Furthermore, examples of the hydrocarbon group having a carbon number of 1 to 10, which may be selected as R¹⁵, R^{15a}, R^{15b}, and R^{17b} include the same hydrocarbon groups having a carbon number of 1 to 10, which may be selected as R⁸ in the foregoing general formula (2), and suitable groups thereof are also the same.

### <Synthesis Method of Polyvinyl Ether-based Compound (A)>

A production method of the polyvinyl ether-based compound (A) is not particularly limited, and there is exemplified a method in which a raw material monomer which may form the constitutional unit (a1) and if desired, a raw material monomer which may form the constitutional unit (a2) are used and subjected to polymerization of every kind (e.g., radical polymerization, cationic polymerization, radiation polymerization, etc.) to produce the polyvinyl ether-based compound (A).

Examples of the raw material monomer that forms the constitutional unit (a1) include a vinyl ether-based monomer represented by the following general formula (I).

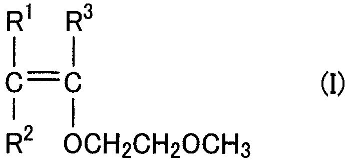

In the general formula (I), R¹ to R³ are the same as prescribed in the foregoing general formula (1).

Examples of the raw material monomer that forms the constitutional unit (a2) include a vinyl ether-based monomer represented by the following general formula (II).

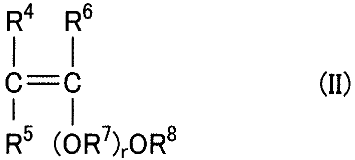

In the general formula (II), R⁴ to R⁸ and r are the same as prescribed in the foregoing general formula (2).

In an embodiment of the present invention, from the viewpoint of obtaining the polyvinyl ether-based compound (A) having a desired kinematic viscosity, a method in which the raw material monomer or monomers are added in the system in the presence of a polymerization catalyst and a polymerization initiator, thereby allowing the polymerization reaction to proceed is preferred.

Examples of the polymerization catalyst include a Brønsted acid, a Lewis acid, an organometallic compound, and the like, with a Lewis acid being preferred.

Examples of the Brønsted acid include hydrofluoric acid, hydrochloric acid, hydrobromic acid, hydroiodic acid, nitric acid, sulfuric acid, trichloroacetic acid, trifluoroacetic acid, and the like.

Examples of the Lewis acid include boron trifluoride, aluminum trichloride, aluminum tribromide, tin tetrachloride, zinc dichloride, ferric chloride, and the like, with boron trifluoride being preferred.

Examples of the organometallic compound include diethylaluminum chloride, ethylaluminum chloride, diethylzinc, and the like.

Examples of the polymerization initiator include water, an alcohol, a phenol, an acetal, an adduct between a vinyl ether and a carboxylic acid, and the like. These may be used either alone or in combination of two or more thereof. The terminal moiety or moieties of the resulting polyvinyl ether-based compound (A) are formed according to the kind of such a polymerization initiator.

Examples of the alcohol include saturated aliphatic alcohols having a carbon number of 1 to 20, such as methanol, ethanol, propanol, isopropanol, butanol, isobutanol, sec-butanol, tert-butanol, various pentanols, various hexanols, various heptanols, various octanols, etc.; unsaturated aliphatic alcohols having a carbon number of 3 to 10, such as allyl alcohol, etc.; ether bond oxygen-containing alcohols having a carbon number of 14 or less, such as an ethylene glycol monoalkyl ether, an ethylene glycol monoaryl ether, etc.; and the like.

Examples of the phenol include phenol, various cresols, and the like.

Examples of the acetal include acetaldehyde dimethyl acetal, acetaldehyde diethyl acetal, acetaldehyde methylethyl acetal, acetaldehyde bis(methoxyethyl) acetal, and the like.

Examples of the adduct between a vinyl ether and a carboxylic acid include acetic acid, propionic acid, n-butyric acid, isobutyric acid, 3,5,5-trimethylcaproic acid, and the like.

To the polymerization initiation terminal of the resulting polyvinyl ether-based compound (A), in the case of using water, an alcohol, or a phenol, hydrogen is bonded, or in the case of using an acetal, one resulting from elimination of one of the alkoxy groups from the acetal used is bonded. In addition, in the case of using an adduct between a vinyl ether and a carboxylic acid, one resulting from elimination of an alkyl carbonyloxy group derived from the carboxylic acid moiety from the adduct between a vinyl ether and a carboxylic acid is bonded.

Meanwhile, in the case of using water, an alcohol, a phenol, or an acetal, the stopped terminal of the polyvinyl ether-based compound (A) becomes an acetal, an olefin, or an aldehyde. In addition, in the case of an adduct between a vinyl ether and a carboxylic acid, the stopped terminal of the polyvinyl ether-based compound (A) becomes a carboxylate ester of hemiacetal, and when hydrolyzed in the presence of an acid, it becomes an aldehyde.

Though the polymerization reaction varies with the kind of the raw material monomer or polymerization initiator to be used, it is preferred that the polymerization reaction is in general performed at a temperature of -80 to 150°C (preferably 0 to 100°C) and finished within a time of about 10 seconds to 10 hours after commencement of the reaction.

In addition, the polymerization reaction is in general performed in the presence of a solvent. Though the solvent to be used is not particularly limited so long as it is able to dissolve a necessary amount of the reaction raw material therein and is also inert to the polymerization reaction, examples thereof include hydrocarbon-based solvents, such as hexane, benzene, toluene, etc.; ether-based solvents, such as ethyl ether, 1,2-dimethoxyethane, tetrahydrofuran, etc.; and the like.

In the case where after the polymerization reaction, the resulting polymer has an unsaturated bond, an acetal, and an aldehyde, in order to convert them to a saturated bond and an ether, it is preferred to further perform a hydrogenation treatment. It is preferred to perform the hydrogenation treatment by introducing a hydrogen gas in the presence of a hydrogenation catalyst at a hydrogen pressure of 0.1 to 10 MPa (preferably 1 to 6 MPa) and undergoing the reaction at a temperature of 10 to 250°C (preferably 50 to 200°C).

Examples of the hydrogenation catalyst include metal catalysts, such as a nickel-based catalyst, a platinum-based catalyst, a palladium-based catalyst, a ruthenium-based catalyst, etc. A catalyst having such a metal catalyst supported on alumina, diatomaceous earth, or the like, a Raney type catalyst, and so on may also be used.

### [Base Oil other than Polyvinyl Ether-based Compound (A)]

The refrigerator oil of an embodiment of the present invention may contain other base oil other than the polyvinyl ether-based compound (A).

Examples of the other base oil include a polyvinyl ether-based compound not including the constitutional unit (a1), a polyalkylene glycol-based compound, a copolymer of a poly(oxy)alkylene glycol or a monoether thereof and a polyvinyl ether not including the constitutional unit (a1), a polyol ester-based compound, and the like.

These other base oils may be used either alone or in combination of two or more thereof.

In the refrigerator oil of an embodiment of the present invention, from the viewpoint of providing a refrigerator oil that is excellent in compatibility with the R32 refrigerant, the content of the base oil other than the polyvinyl ether-based compound (A) is preferably 0 to 30 parts by mass, more preferably 0 to 20 parts by mass, still more preferably 0 to 10 parts by mass, and yet still more preferably 0 to 3 parts by mass based on 100 parts by mass of the polyvinyl ether-based compound (A).

### [Additive for Refrigerator Oil]

Though the refrigerator oil of an embodiment of the present invention may be one composed of only the base oil, it may further contain an additive for refrigerator oil that is used for a refrigerator oil within a range where the advantageous effects of the present invention are not impaired. The refrigerator oil may also be one composed of only the base oil and the additive for refrigerator oil.

Examples of such an additive for refrigerator oil include a load-resistant additive, a chlorine scavenger, an antioxidant, a metal deactivator, a defoaming agent, a detergent dispersant, a viscosity index improver, an oily agent, an extreme pressure agent, a rust inhibitor, an anti-wear agent, a pour point depressant, and the like.

These additives may be used either alone or in combination of two or more thereof.

The content of each of these additives for refrigerator oil is preferably 0.01 to 10% by mass, and more preferably 0.05 to 5% by mass based on the total amount (100% by mass) of the refrigerator oil.

The total content of the additives for refrigerator oil is preferably 0 to 20 parts by mass, more preferably 0 to 10 parts by mass, still more preferably 0 to 5 parts by mass, and yet still more preferably 0 to 2 parts by mass based on 100 parts by mass of the polyvinyl ether-based compound (A).

Examples of the load-resistant additive include organic sulfur-based compounds, such as a monosulfide, a polysulfide, a sulfoxide, a sulfone, a thiosulfinate, a sulfurized fat and oil, a thiocarbonate, a thiophene, a thiazole, a methanesulfonate ester, etc.; phosphate ester-based compounds, such as a phosphoric acid monoester, a phosphoric acid diester, a phosphoric acid triester (e.g., tricresyl phosphate), etc.; phosphite ester-based compounds, such as a phosphorous acid monoester, a phosphorous acid diester, a phosphorous acid triester, etc.; thiophosphate ester-based compounds, such as a thiophosphoric acid triester, etc.; fatty acid esters, such as a higher fatty acid, a hydroxyaryl fatty acid, a carboxylic acid-containing polyhydric alcohol ester, an acrylic acid ester, etc.; organic chlorine-based compounds, such as a chlorinated hydrocarbon, a chlorinated carboxylic acid derivative, etc.; organic fluorinated compounds, such as a fluorinated aliphatic carboxylic acid, a fluorinated ethylene resin, a fluorinated alkyl polysiloxane, fluorinated graphite, etc.; higher alcohols; metal-based compounds, such as a naphthenic acid salt (e.g., lead naphthenate), a fatty acid salt (e.g., a lead fatty acid), a thiophosphate (e.g., a zinc dialkyldithiophosphate), a thiocarbamic acid salt, an organic molybdenum compound, an organotin compound, an organogermanium compound, a borate ester, etc.; and the like.

Examples of the chlorine scavenger include a glycidyl ether group-containing compound, an epoxidized fatty acid monoester, an epoxidized fat and oil, an epoxy cycloalkyl group-containing compound, and the like.

Examples of the antioxidant include phenol-based antioxidants, such as 2,6-di-tert-butyl-4-methylphenol, 2,6-di-tert-butyl-4-ethylphenol, 2,2'-methylenebis(4-methyl-6-tert-butylphenol), etc.; amine-based antioxidants, such as phenyl-α-naphthylamine, N,N'-diphenyl-p-phenylenediamine, etc.; and the like.

Examples of the metal deactivator include an N-[N,N'-dialkyl(alkyl group having a carbon number of 3 to 12)aminomethyl] triazole, a benzotriazole derivative, and the like.

Examples of the defoaming agent include silicone oils, such as dimethylpolysiloxane, etc.; polymethacrylates; and the like.

Examples of the detergent dispersant include a sulfonate, a phenate, a succinimide, and the like.

Examples of the viscosity index improver include a polymethacrylate, a polyisobutylene, an ethylene-propylene copolymer, a styrene-diene hydrogenated copolymer, and the like.

Examples of the oily agent include aliphatic saturated or unsaturated monocarboxylic acids, such as stearic acid, oleic acid, etc.; polymerized fatty acids, such as a dimer acid, a hydrogenated dimer acid, etc.; hydroxy fatty acids, such as ricinoleic acid, 12-hydroxystearic acid, etc.; aliphatic saturated or unsaturated monoalcohols, such as lauryl alcohol, oleyl alcohol, etc.; aliphatic saturated or unsaturated monoamines, such as stearyl amine, oleyl amine, etc.; aliphatic saturated or unsaturated monocarboxylic acid amides, such as lauric amide, oleic amide, etc.; partial esters of a polyhydric alcohol (e.g., glycerin, sorbitol, etc.) and an aliphatic saturated or unsaturated monocarboxylic acid; and the like.

Examples of the extreme pressure agent include phosphorus-based extreme pressure agents, such as a phosphate ester, an acidic phosphate ester, a phosphite ester, an acidic phosphite ester, and amine salts thereof, etc.; fatty acid metal salts having a carbon number of 3 to 60; sulfur-based extreme pressure agents, such as a sulfurized fat and oil, a sulfurized fatty acid, a sulfurized ester, etc.; and the like.

Examples of the rust inhibitor include a metal sulfonate, an aliphatic amine, an organic phosphite ester, an organic phosphate ester, an organic sulfonic acid metal salt, an organic phosphoric acid metal salt, an alkenyl succinic acid ester, a polyhydric alcohol ester, and the like.

Examples of the anti-wear agent include inorganic or organic molybdenum compounds, such as molybdenum disulfide, etc.; organic boron compounds, such as an alkyl mercaptyl borate, etc.; and the like.

Examples of the pour point depressant include a polymethacrylate, a polyalkyl styrene, an alkyl naphthalene, and the like.

### [Physical Properties of Refrigerator Oil]

The refrigerator oil of the present invention is excellent in compatibility with the R32 refrigerant having a low global warming potential even in a low-temperature environment of -30°C or lower. Accordingly, it is preferred that the refrigerator oil of an embodiment of the present invention is used for a refrigerator to be used for a heat pump application in a cold district or an air conditioning application in a low-temperature warehouse.

The two-layer separation temperature of the refrigerator oil of an embodiment of the present invention and the R32 refrigerant on the low-temperature side is preferably -30°C or lower, more preferably -35°C or lower, still more preferably -40°C or lower, and yet still more preferably -50°C or lower.

In the present specification, the aforementioned "two-layer separation temperature of the refrigerator oil and the R32 refrigerant on the low-temperature side" means a value as measured by the method described in the Examples, by using, as a sample, a mixture composed of the refrigerator oil and the R32 refrigerant in a mass ratio of the refrigerator oil to the R32 refrigerant of 15/85.

The kinematic viscosity at 40°C of the refrigerator oil of an embodiment of the present invention is preferably 5 to 1,000 mm²/s, more preferably 7 to 300 mm²/s, still more preferably 10 to 150 mm²/s, and yet still more preferably 20 to 110 mm²/s.

The viscosity index of the refrigerator oil of an embodiment of the present invention is preferably 70 or more, more preferably 80 or more, still more preferably 90 or more, and yet still more preferably 110 or more.

In the present specification, the viscosity index means a value as measured in conformity with JIS K2283:1983.

### [Composition for Refrigerator]

The composition for refrigerator of the present invention contains the refrigerant including difluoromethane (R32) and the aforementioned refrigerator oil of the present invention.

The refrigerator oil of the present invention is excellent in compatibility with the R32 refrigerant even in a low-temperature environment of -30°C or lower, and therefore, even when the composition for refrigerator of the present invention is used in a low-temperature environment of -30°C or lower, the phase separation between the refrigerator oil and the R32 refrigerant is hardly generated. Accordingly, it is preferred that the composition for refrigerator of an embodiment of the present invention is used for a refrigerator to be used for a heat pump application in a cold district or an air conditioning application in a low-temperature warehouse.

In the composition for refrigerator of an embodiment of the present invention, a content ratio of the refrigerator oil and the R32 refrigerant ((refrigerator oil)/(R32 refrigerant)) is preferably 1/99 to 99/1, and more preferably 5/95 to 60/40 in terms of a mass ratio.

### [Refrigerant]

In the composition for refrigerator of an embodiment of the present invention, other refrigerant may also be used in combination with the R32 refrigerant. Examples of the other refrigerant include a fluorohydrocarbon refrigerant, a natural refrigerant, and the like. The other refrigerant may be used either alone or in combination of two or more thereof.

In the refrigerant that is included in the composition for refrigerator of an embodiment of the present invention, the content of the R32 refrigerant is preferably 30 to 100% by mass, more preferably 50 to 100% by mass, still more preferably 70 to 100% by mass, yet still more preferably 90 to 100% by mass, and especially preferably 100% by mass based on the total amount (100% by mass) of the aforementioned refrigerant.

The fluorohydrocarbon refrigerant is classified into a saturated fluorohydrocarbon refrigerant and an unsaturated fluorohydrocarbon refrigerant.

Examples of the saturated fluorohydrocarbon refrigerant include 1,1,1,2,2-pentafluoroethane (R125), 1,1,1,2-tetrafluoroethane (R134a), 1,1,2,2-tetrafluoroethane (R134), 1,1,1-trifluoroethane (R143a), 1,1,2-trifluoroethane (R143), 1,1-difluoroethane (R152a), and the like.

A mixed refrigerant in which two or more of these saturated fluorohydrocarbon refrigerants are mixed may also be used, and examples of the mixed refrigerant include R404A (a mixture of R125, R143a, and R134a); R407A, R407C, and R407E (all of which are a mixture of R32, R125, and R134a); R410A (a mixture of R32 and R125); R507A (a mixture of R125 and R143a); and the like.

Examples of the unsaturated fluorohydrocarbon refrigerant include 1,2,3,3,3-pentafluoropropene (R1225ye), 2,3,3,3-tetrafluoropropene (R1234yf), 1,3,3,3-tetrafluoropropene (R1234ze), 1,2,3,3-tetrafluoropropene (R1234yz), and the like.

Such an unsaturated fluorohydrocarbon refrigerant may also be used in combination with the aforementioned saturated fluorohydrocarbon refrigerant.

Examples of the natural refrigerant include carbon dioxide (carbonic acid gas); hydrocarbons, such as propane, n-butane, isobutane, 2-methylbutane, n-pentane, cyclopentaneisobutane, n-butane, etc.; and ammonia.

Such a natural refrigerant may also be used in combination with the aforementioned fluorohydrocarbon refrigerant.

### [Refrigerator]

The refrigerator of the present invention is one in which the refrigerator oil or the composition for refrigerator according to the aforementioned embodiments is used, and the foregoing refrigerator oil or composition for refrigerator is filled in the inside of the refrigerator and used.

In the present invention, the refrigerator is preferably a compression type refrigerator, and more preferably a refrigerator having a refrigeration cycle including a compressor, a condenser, an expansion mechanism (e.g., an expansion valve, etc.), and an evaporator, or a refrigeration cycle including a compressor, a condenser, an expansion mechanism, a dryer, and an evaporator.

The refrigerator oil is used for lubricating a sliding portion provided in, for example, a compressor or the like.

Though the sliding portion is not particularly limited, it is preferred that any part of the sliding portion includes a metal, such as iron, etc., and it is preferably a portion sliding between the metals.

Examples of the refrigerator of an embodiment of the present invention include an air conditioner, a gas heat pump (GHP) system, an air-conditioning system, a refrigerating chamber, an automatic vending machine, a showcase, a hot water supplier, a floor heating system, and the like.

Above all, the refrigerator oil of the present invention is excellent in compatibility with the R32 refrigerant even in a low-temperature environment of -30°C or lower, and therefore, it is preferred that the refrigerator of an embodiment of the present invention is used for a refrigerator to be used for a heat pump application in a cold district or an air conditioning application in a low-temperature warehouse.

The refrigerator oil and the composition for refrigerator of the present invention may be used for not only the aforementioned various refrigerator systems but also hot water supply systems or heating systems.

### Examples

The present invention is hereunder described in more detail with reference to the Examples, but it should be construed that the present invention is by no means limited by these Examples.

The measurement methods of properties of refrigerator oils prepared in the Examples and Comparative Example are as follows.

### (1) Kinematic viscosity at 40°C

The kinematic viscosity at 40°C was measured in conformity with JIS K2283:1983.

### (2) Viscosity index

The viscosity index was measured in conformity with JIS K2283:1983.

### (3) Number average molecular weight (Mn)

As the number average molecular weight, a value as expressed in terms of standard polystyrene by using a gel permeation chromatograph ("1260 Type HPLC", manufactured by Agilent) under the following conditions was used.

### (Measurement conditions)

- Column: One in which two of "Shodex LF404" are successively connected to each other
- Column temperature: 35°C
- Developing solvent: Chloroform
- Flow rate: 0.3 mL/min

### (4) Measurement of two-layer separation temperature of the refrigerator oil and the R32 refrigerant on the low-temperature side

A mixture composed of a refrigerator oil and difluoromethane (R32) in a mass ratio of 15/85 (refrigerator oil concentration: 15% by mass) was prepared, and the mixture was charged in a pressure-resistant glass ampule, which was then connected with a vacuum piping and an R32 refrigerant piping. The ampule was deaerated under vacuum at room temperature and then cooled with liquefied nitrogen, and a predetermined amount of an R32 refrigerant was collected in the ampule through the R32 refrigerant piping, followed by sealing the ampule.

Subsequently, the ampule was irradiated with a laser; the inside of a thermostat was gradually cooled from room temperature while measuring a light transmittance of the ampule; and a temperature at which the light transmittance of the ampule reached 50% of the light transmittance of the ampule before the measurement was defined as the two-layer separation temperature objective to the measurement, of the refrigerator oil and the R32 refrigerant on the low-temperature side.

### Preparation Example 1 [Preparation of Catalyst]

6 g of a nickel/diatomaceous earth catalyst (a trade name: N113, manufactured by JGC C&C) and 300 g of isooctane were added, respectively in an SUS316L-made 2-liter volume autoclave.

The inside of the autoclave was purged with nitrogen and then purged with hydrogen; thereafter, the temperature was raised to 140°C at a hydrogen pressure of 3.0 MPaG; and the system was kept at 140°C for 30 minutes, followed by cooling to room temperature.

The inside of the autoclave was purged with nitrogen; 10 g of acetaldehyde diethyl acetal was then added in the autoclave; the inside of the autoclave was again purged with nitrogen and subsequently purged with hydrogen; thereafter, the temperature was raised to 140°C at a hydrogen pressure of 3.0 MPaG; and the system was kept at 140°C for 30 minutes. On this occasion, the pressure within the autoclave was increased due to the temperature rise, whereas a decrease of the hydrogen pressure was perceived due to the reaction of acetaldehyde diethyl acetal. In the case where the hydrogen pressure became 3.0 MPaG or less, hydrogen was injected into the autoclave, thereby adjusting the system so as to keep the hydrogen pressure at 3.0 MPaG.

After holding the system, the system was cooled to room temperature and once depressurized, and the inside of the autoclave was again purged with nitrogen, followed by depressurization.

### Example 1 [Synthesis of Polyvinyl Ether (1)]

In a glass-made one-liter flask equipped with a stirrer, 133 g of toluene, 33.6 g of ethylene glycol monomethyl ether, and 0.2 g of a boron trifluoride-diethyl ether complex (polymerization catalyst) were added, respectively. In addition, 500 g (4.90 mol) of methoxyethyl vinyl ether was added in a separately prepared Erlenmeyer flask.

Then, the stirrer was operated; the methoxyethyl vinyl ether within the aforementioned Erlenmeyer flask was supplied into the stirred system of the aforementioned one-liter flask at a rate 5 mL/min by using a pump; and when the supplied amount reached 54 g, the pump was once stopped.

After confirming that the temperature within the system of the aforementioned one-liter flask rose, the pump was restarted; the remaining methoxyethyl vinyl ether was supplied into the stirred system of the one-liter flask over 4 hours; and after completion of the supply, stirring was further continued for 5 minutes. During supplying the methoxyethyl vinyl ether, the inside of the system was always continued to be stirred, and the temperature within the system was controlled at 25°C using a water bath.

Subsequently, 10 g of an absorbing agent was added in the system of the one-liter flask, followed by stirring for one hour. Then, the resulting reaction solution was filtered to obtain a filtrate, and the solvent and a light component were removed from the filtrate by using a rotary evaporator, thereby obtaining a crude product.

Thereafter, 120 g of the obtained crude product and 300 g of isooctane were added in the 2-liter autoclave in which the catalyst prepared in Preparation Example 1 was present; after the inside of the autoclave was purged with hydrogen, the hydrogen pressure was kept at 3.5 MPa, and the temperature was raised to 140°C over 30 minutes while stirring the inside of the system; and the mixture was further allowed to react at 140°C for 3 hours.

After completion of the reaction, the reaction solution was cooled to room temperature, and the pressure was reduced to atmospheric pressure. Then, the reaction solution was filtered, and the solvent, water, and the like were removed from the resulting filtrate by using a rotary evaporator, thereby obtaining a refrigerator oil composed of a polyvinyl ether (1).

The polyvinyl ether (1) includes the constitutional unit (a1) represented by the foregoing general formula (1) in which R¹ to R³ are a hydrogen atom. In addition, the content of the constitutional unit (a1) is 100 mol%, and the content of the constitutional unit (a2) is 0 mol%, based on the total constitutional units (100 mol%) of the polyvinyl ether (1) as estimated from the charged amount.

### Example 2 [Synthesis of Polyvinyl Ether (2)]

In a glass-made 300-mL flask equipped with a stirrer, 49 g of toluene, 19.2 g of acetaldehyde bis(methoxyethyl) acetal, 8.5 g of acetaldehyde diethyl acetal, and 0.1 g of a boron trifluoride-diethyl ether complex were added, respectively. In addition, 115.6 g (1.13 mol) of methoxyethyl vinyl ether and 54.4 g (0.75 mol) of ethyl vinyl ether were added, respectively in a separately prepared Erlenmeyer flask, thereby preparing a monomer mixed solution.

Then, the stirrer was operated; the monomer mixed solution within the aforementioned Erlenmeyer flask was supplied into the stirred system of the aforementioned 300-mL flask over 4 hours by using a pump; and after completion of the supply, stirring was further continued for 5 minutes. During supplying the monomer mixed solution, the inside of the system was always continued to be stirred, and the temperature within the system was controlled at 25°C using a water bath.

Subsequently, 5 g of an absorbing agent was added in the system of the 300-mL flask, followed by stirring for one hour. Then, the resulting reaction solution was filtered, and the solvent and a light component were removed from the filtrate by using a rotary evaporator, thereby obtaining a crude product.

Thereafter, 120 g of the obtained crude product and 300 g of isooctane were added in the 2-liter autoclave in which the catalyst prepared in Preparation Example 1 was present; after the inside of the autoclave was purged with hydrogen, the hydrogen pressure was kept at 3.5 MPa, and the temperature was raised to 140°C over 30 minutes while stirring the inside of the system; and the mixture was further allowed to react at 140°C for 3 hours.

After completion of the reaction, the reaction solution was cooled to room temperature, and the pressure was reduced to atmospheric pressure. Then, the reaction solution was filtered, and the solvent, water, and the like were removed from the resulting filtrate by using a rotary evaporator, thereby obtaining a refrigerator oil composed of a polyvinyl ether (2).

The polyvinyl ether (2) includes the constitutional unit (a1) represented by the foregoing general formula (1) in which R¹ to R³ are a hydrogen atom and the constitutional unit (a2) represented by the foregoing general formula (2) in which R⁴ to R⁶ are a hydrogen atom, r is 0, and R⁸ is an ethyl group. In addition, the content of the constitutional unit (a1) is 60 mol%, and the content of the constitutional unit (a2) is 40 mol%, based on the total constitutional units (100 mol%) of the polyvinyl ether (2) as estimated from the charged amount.

### Example 3 [Synthesis of Polyvinyl Ether (3)]

A refrigerator oil composed of a polyvinyl ether (3) was obtained in the same manner as in Example 2, except that the respective components added in the 300-mL flask and the respective components added in the Erlenmeyer flask were changed as follows.

### (Components within the 300-mL flask)

- Toluene: 18 g
- Acetaldehyde bis(methoxyethyl) acetal: 16.2 g
- Acetaldehyde diethyl acetal: 10.7 g
- Boron trifluoride-diethyl ether complex: 0.1 g

### (Components within the Erlenmeyer flask)

- Methoxyethyl vinyl ether: 87.9 g (0.86 mol)
- Ethyl vinyl ether: 62.1 g (0.86 mol)

The polyvinyl ether (3) includes the constitutional unit (a1) represented by the foregoing general formula (1) in which R¹ to R³ are a hydrogen atom and the constitutional unit (a2) represented by the foregoing general formula (2) in which R⁴ to R⁶ are a hydrogen atom, r is 0, and R⁸ is an ethyl group. In addition, the content of the constitutional unit (a1) is 50 mol%, and the content of the constitutional unit (a2) is 50 mol%, based on the total constitutional units (100 mol%) of the polyvinyl ether (3) as estimated from the charged amount.

### Example 4 [Synthesis of Polyvinyl Ether (4)]

A refrigerator oil composed of a polyvinyl ether (4) was obtained in the same manner as in Example 2, except that the respective components added in the 300-mL flask and the respective components added in the Erlenmeyer flask were changed as follows.

### (Components within the 300-mL flask)

- Toluene: 49 g
- Acetaldehyde bis(methoxyethyl) acetal: 13.7 g
- Acetaldehyde diethyl acetal: 13.7 g
- Boron trifluoride-diethyl ether complex: 0.1 g

### (Components within the Erlenmeyer flask)

- Methoxyethyl vinyl ether: 82.6 g (0.81 mol)
- Ethyl vinyl ether: 87.4 g (1.21 mol)

The polyvinyl ether (4) includes the constitutional unit (a1) represented by the foregoing general formula (1) in which R¹ to R³ are a hydrogen atom and the constitutional unit (a2) represented by the foregoing general formula (2) in which R⁴ to R⁶ are a hydrogen atom, r is 0, and R⁸ is an ethyl group. In addition, the content of the constitutional unit (a1) is 40 mol%, and the content of the constitutional unit (a2) is 60 mol%, based on the total constitutional units (100 mol%) of the polyvinyl ether (4) as estimated from the charged amount.

### Comparative Example 1 [Synthesis of Polyvinyl Ether (5)]

A refrigerator oil composed of a polyvinyl ether (5) was obtained in the same manner as in Example 1, except that the respective components added in the one-liter flask and the respective components added in the Erlenmeyer flask were changed as follows; and that the timing of once stopping the pump was changed to a stage at which "45.7 g" of the component within the Erlenmeyer flask was supplied.

### (Components within the one-liter flask)

- Toluene: 106 g
- Ethanol: 24.3 g
- Boron trifluoride-diethyl ether complex: 0.2 g

### (Component within the Erlenmeyer flask)

- Ethyl vinyl ether: 400 g (5.56 mol)

The polyvinyl ether (5) includes the constitutional unit (a2) represented by the foregoing general formula (2) in which R⁴ to R⁶ are a hydrogen atom, r is 0, and R⁸ is an ethyl group. In addition, the content of the constitutional unit (a1) is 0 mol%, and the content of the constitutional unit (a2) is 100 mol%, based on the total constitutional units (100 mol%) of the polyvinyl ether (5) as estimated from the charged amount.

The properties of the refrigerator oils composed of the polyvinyl ethers (1) to (5) obtained in the Examples and Comparative Example, respectively are shown in Table 1.

**Table 1**

| | Kind | Content *¹ of constitutional unit (a1) (mol%) | Content *¹ of constitutional unit (a2) (mol%) | Kinematic viscosity at 40°C (mm²/s) | Viscosity index | Mn | Two-layer separation temperature of refrigerator oil and R32 refrigerant on the low-temperature side (°C) |
|---|---|---|---|---|---|---|---|
| Example 1 | Polyvinyl ether (1) | 100 | 0 | 66 | 165 | 1132 | <-50 |
| Example 2 | Polyvinyl ether (2) | 60 | 40 | 56 | 127 | 1035 | <-50 |
| Example 3 | Polyvinyl ether (3) | 50 | 50 | 67 | 134 | 914 | <-50 |
| Example 4 | Polyvinyl ether (4) | 40 | 60 | 52 | 142 | 966 | <-50 |
| Comparative Example 1 | Polyvinyl ether (5) | 0 | 100 | 62 | 91 | 756 | 0 |

| | | | | | | | |
|---|---|---|---|---|---|---|---|
| *1: Content based on the total constitutional units (100 mol%) of polyvinyl ether as estimated from the charged amount | | | | | | | |

From Table 1, it is noted that in the refrigerator oils composed of the polyvinyl ethers (1) to (4) obtained in Examples 1 to 4, respectively, the two-layer separation temperature of the refrigerator oils and the R32 refrigerant that is the refrigerant on the low-temperature side is lower than -50°C, and the low-temperature compatibility with the R32 refrigerant is extremely excellent.

## Claims

1. A refrigerator oil for a refrigerant including difluoromethane (R32), comprising a polyvinyl ether-based compound (A) including a constitutional unit (a1) having a methoxyethyl group in a side chain thereof.

2. The refrigerator oil according to claim 1, wherein the constitutional unit (a1) is represented by the following general formula (1): 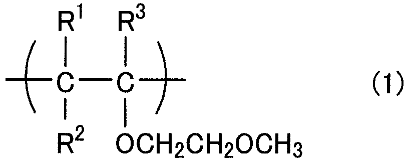 wherein R¹, R², and R³ each independently represent a hydrogen atom or a hydrocarbon group having a carbon number of 1 to 8.

3. The refrigerator oil according to claim 1 or 2, wherein the polyvinyl ether-based compound (A) includes, together with the constitutional unit (a1), a constitutional unit (a2) represented by the following general formula (2) that is different from the constitutional unit (a1): 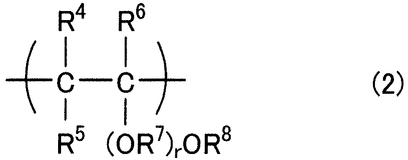 wherein R⁴, R⁵, and R⁶ each independently represent a hydrogen atom or a hydrocarbon group having a carbon number of 1 to 8; R⁷ represents a divalent hydrocarbon group having a carbon number of 2 to 10; r represents a number of 0 to 10; and R⁸ represents a hydrocarbon group having a carbon number of 1 to 10, provided that when R⁷ is an ethylene group (-CH₂CH₂-), r is not 1 or R⁸ is not a methyl group.

4. The refrigerator oil according to any one of claims 1 to 3, wherein the content of the constitutional unit (a1) is 1 mol% or more based on the total constitutional units (100 mol%) of the polyvinyl ether-based compound (A).

5. The refrigerator oil according to any one of claims 1 to 4, wherein a number average molecular weight of the polyvinyl ether-based compound (A) is from 300 to 3,000.

6. The refrigerator oil according to any one of claims 1 to 5, wherein the content of the polyvinyl ether-based compound (A) is from 70 to 100% by mass based on the total amount of the refrigerator oil.

7. The refrigerator oil according to any one of claims 1 to 6, wherein a two-layer separation temperature of the refrigerator oil and difluoromethane (R32) on the low-temperature side is -30°C or lower.

8. The refrigerator oil according to any one of claims 1 to 7, wherein a kinematic viscosity at 40°C is from 5 to 1,000 mm²/s.

9. A composition for refrigerator, comprising a refrigerant including difluoromethane (R32) and the refrigerator oil according to any one of claims 1 to 8.

10. The composition for refrigerator according to claim 9, wherein the content of the difluoromethane (R32) is from 30 to 100% by mass based on the total amount of the refrigerant.

11. A refrigerator in which the refrigerator oil according to any one of claims 1 to 8, or the composition for refrigerator according to claim 9 or 10 is used.

12. The refrigerator according to claim 11, which is an air conditioner, a gas heat pump system, an air-conditioning system, a refrigerating chamber, an automatic vending machine, a showcase, a hot water supplier, or a floor heating system.
